# EUROPÄISCHE PATENTANMELDUNG

(11) **EP 4 471 219 A1**
(43) Veröffentlichungstag der Anmeldung: **04.12.2024**
(21) Anmeldenummer: 24179230.8
(22) Anmeldetag: 31.05.2024
(51) Int. Cl.: E03F 5/14, E03F 1/00, B01D 24/12, C02F 1/00, E03F 5/04, C02F 1/28, C02F 3/00, C02F 103/00

(54) **FILTERANLAGE FÜR OBERFLÄCHENWASSER**

(30) Priorität: 02.06.2023 DE 202023103060 U
(71) Anmelder: Funke Kunststoffe GmbH, 59071 Hamm-Uentrop (DE)
(72) Erfinder: Funke, Matthias, 48324 Sendenhorst (DE); Funke, Christian, 48324 Sendenhorst (DE)
(74) Vertreter: Patentanwälte Olbricht Buchhold Keulertz

(57) **Zusammenfassung**

Bei einer im Boden (3) angeordneten Filteranlage (1) für Oberflächenwasser, in deren Gehäuse (30) ein filterwirksames Substrat (14) angeordnet ist, schlägt die Erfindung vor, dass das Gehäuse (30) nach oben geschlossen ausgestaltet ist und an das Gehäuse (30) ein Steigrohr (10) anschließt, welches im Gebrauch aufwärts und wenigstens bis zur Bodenoberfläche des Bodens (3) verläuft. Weiterhin schlägt die Erfindung ein Verfahren zum Einbringen des Substrats (14) in die Filteranlage (1) vor, wobei das Substrat (14) von oben durch das Steigrohr (10) bis in das Gehäuse (30) eingebracht und anschließend innerhalb des liegend ausgerichteten Gehäuses (30) in dessen Längsrichtung verteilt wird.

## Beschreibung

Die Erfindung betrifft eine Filteranlage für Oberflächenwasser.

Oberflächenwasser, welches direkt der Versickerung zugeführt wird, muss von Inhaltsstoffen befreit werden, die für das Grundwasser schädlich sind. Dies betrifft unter anderem Partikel wie z. B. Gummi- und Bremsenabrieb von verkehrsbelasteten Flächen, einschließlich der im Abrieb enthaltenen Schwermetalle, oder Kupfer- oder Zinkabschwemmungen von Hausdächern, und viele andere Inhaltsstoffe des Oberflächenwassers.

Aus der DE 102 00 616 A1 sind ein Substrat, ein Verfahren und auch eine Rinne zur Behandlung von Oberflächenwasser bekannt, wobei das Substrat unter anderem Material enthält, welches eine rein mechanische Filterwirkung aufweist. Das Substrat kann in eine Mulde oder in eine Rinne eingebracht werden. Während eine Rinne dazu dient, Wasser von einem zu einem anderen Punkt zu leiten, dient eine Mulde dazu, Wasser aufzunehmen und an Ort und Stelle zur Versickerung in den Untergrund zu leiten. Wenn rinnenartige Elemente mit Bodenöffnungen versehen sind, bilden sie dementsprechend keine Rinne, sondern vielmehr eine langgezogene Versickerungsmulde, die dazu dient, Wasser aufzunehmen und durch die Bodenöffnungen in den Untergrund zu leiten. Im Falle einer Ausgestaltung als Mulde findet daher eine im Wesentlichen vertikale Durchströmung des Filters statt. Im Falle einer Ausgestaltung als Rinne ist aus der genannten DE 102 00 616 A1 eine gattungsgemäße Filteranlage für Oberflächenwasser bekannt, bei der die Durchströmung des Filters für Oberflächenwasser als im Wesentlichen horizontal bezeichnet werden kann, da das Wasser in Längsrichtung der Rinne zu deren Auslass und dabei im Wesentlichen höhengleich strömt. Die rinnenförmigen Elemente verlaufen typischerweise unmittelbar an der Bodenoberfläche, so dass das Oberflächenwasser direkt von der Bodenoberfläche in die Rinne abfließen kann.

Die Bodenoberfläche weist einen Bodenbelag auf, der natürlich ausgestaltet sein kann, beispielsweise in Form einer Rasenfläche, als Beet oder dergleichen. Der Bodenbelag ist jedoch typischerweise als Asphaltschicht oder als Pflasterung ausgestaltet, da die Rinne üblicherweise dazu dient, Oberflächenwasser von einer versiegelten Fläche aufzunehmen, zu filtern und abzuleiten. Insbesondere kann das die Filterwirkwirkung bestimmende, durchströmbare Filtermedium als ein Substrat ausgestaltet sein, das durch seine Porosität eine mechanische Filterwirkung aufweist und zudem je nach Zusammensetzung des Substrats auch eine chemische Wirkung aufweisen kann, z. B. um Inhaltsstoffe des Wassers zu binden, sowie eine biologische Wirkung aufweisen kann, z. B. um Inhaltsstoffe des Wassers durch Kleinstlebewesen abzubauen.

Die bekannte Rinne kann dadurch geschaffen werden, dass rinnenartige Elemente, die als Rinnenabschnitt bezeichnet werden, zu einer größeren Länge aneinandergereiht werden. Eine solche Rinne kann beispielsweise entlang versiegelter Flächen vorgesehen sein, wie beispielsweise Parkplätzen, um von der versiegelten Fläche ablaufendes Wasser aufnehmen und zu filtern, bevor das gereinigte Wasser beispielsweise in einen Speichertank oder über einen Schacht in die Kanalisation geleitet wird. Das Gehäuse dieser bekannten Filteranlage besteht aus einem unteren, länglichen, nach oben offenen, im Querschnitt U-förmigen Rinnenabschnitt sowie einer als Gitter oder Rost ausgestalteten Abdeckung, die für Wasser durchlässig ist und sich über den oben offenen Rinnen- oder Muldenabschnitt erstreckt. Der Einlass einer aus solchen Abschnitten gebildeten Rinne besteht in der für das Oberflächenwasser durchlässigen Abdeckung und erstreckt sich somit über die gesamte Länge der Rinne. Dementsprechend muss der Filter dort angeordnet werden, wo das zu behandelnde Oberflächenwasser anfällt.

Insbesondere bei befahrbaren Verkehrsflächen muss die Abdeckung der bekannten Filteranlage erheblichen Druckbelastungen standhalten können. Während die Rinnenabschnitte aus Kunststoff bestehen können, bestehen die Abdeckungen typischerweise aus Gusseisen und werden so eingebaut, dass sie sich nicht unmittelbar auf den Rinnenabschnitten abstützen, sondern vielmehr auf seitlich von der Rinne angeordneten Stützschultern, die beispielsweise als lastaufnehmende Streifen aus Beton ausgestaltet sein können. Sowohl die Abdeckungen selbst als auch ihre Montage bzw. Fundamentierung machen einen erheblichen, häufig den überwiegenden, Anteil an den Kosten der Rinne aus. Den Bodenbelag von beiden Seiten an die Rinne anzuarbeiten stellt einen erhöhten Aufwand bei der Erstellung des Bodenbelags dar, was die durch die Filteranlage verursachten Kosten negativ beeinflusst.

Um sicherzustellen, dass das Oberflächenwasser von der Bodenoberfläche in die Rinne einströmt und gefiltert werden kann sowie zu der gewünschten definierten Stelle, nämlich zu dem Auslass der Filteranlage geleitet werden kann, verlaufen die Abdeckungen im besten Fall bündig, häufig jedoch geringfügig niedriger als die benachbarte Bodenoberfläche. In jedem Fall ergibt sich durch die Rinnenabdeckung ein Wechsel oder eine Unterbrechung des Bodenbelags, wobei ein erheblicher Arbeitsaufwand darin besteht, den Bodenbelag - ggf. auf beiden Seiten der Rinne - an die Rinne anzuarbeiten. Der Wechsel im Bodenbelag kann im Bereich von Laufzonen eine Stolpergefahr darstellen, wenn dieser Wechsel mit einem Höhenunterschied zwischen der Abdeckung und dem angrenzenden Bodenbelag einhergeht. Unabhängig von einer solchen Stolpergefahr kann jedoch auch allein aus ästhetischen Gründen eine optisch sichtbare Unterbrechung des Bodenbelags unerwünscht sein.

Aus der Praxis ist es weiterhin bekannt, Oberflächenwasser mit Hilfe von Schächten zu filtern, so dass in diesen Fällen von einer vertikalen Durchströmung des Filters gesprochen wird, da Ein- und Auslass im Abstand übereinander angeordnet sind. Der Einbau von Schächten in den Boden ist vergleichsweise aufwändig, da man hierzu in vergleichsweise tiefe Erdschichten vordringen muss, was die Gefahr von Schäden an bereits im Boden verlegten Leitungen erhöht. Die Grenzlinie einer Schachtabdeckung zum umgebenden Bodenbelag ist kürzer als die Grenzline, entlang welcher die oben genannte Rinne an den benachbarten Bodenbelag grenzt, was den Arbeitsaufwand des erwähnten Anarbeitens im Vergleich verringert. Jedoch muss typischerweise mehr Aushub erzeugt werden als bei den erwähnten Rinnen und Mulden, insbesondere da die Schächte in den meisten Fällen begehbar ausgeführt werden müssen, also einen Innendurchmesser von wenigstens 800 oder 1.000 mm aufweisen, was die Erdarbeiten besonders aufwändig macht und durch die großen Schachtbauteile und insbesondere die erforderliche, entsprechend große Abdeckung auch die Kosten für die erforderlichen Bauteile und den Aufwand für deren Handhabung nachteilig beeinflusst. Weiterhin bedingt ein Schacht hinsichtlich der Wasserführung einen Höhenverlust zwischen Ein- und Auslass was nachteilig sein kann, wenn das gefilterte Wasser später oberflächennah verfügbar gemacht werden soll, z. B. zur Pflanzenbewässerung.

Aus der Praxis sind weiterhin zur Reinigung von Oberflächenwasser Sedimentationsanlagen bekannt. Diese können als liegendes Rohr ausgestaltet sein, enthalten aber kein Filtermedium und erreichen daher in der Regel nicht die gewünschte Reinigungsleistung, um unerwünschte Stoffe aus dem Oberflächenwasser zu entfernen.

Der Erfindung liegt die Aufgabe zugrunde, eine gattungsgemäße Filteranlage dahingehend zu verbessern, dass diese möglichst preisgünstig bereitgestellt und möglichst problemlos eingebaut werden kann.

Diese Aufgabe wird durch eine Filteranlage mit den Merkmalen des Anspruchs 1 gelöst sowie durch ein Verfahren nach Anspruch 11. Vorteilhafte Ausgestaltungen sind in den Unteransprüchen beschrieben.

Die Erfindung schlägt mit anderen Worten vor, das längliche Gehäuse oben geschlossen auszugestalten. Dies ist insofern überraschend, als im Vergleich zu den gattungsgemäßen Filteranlagen der großflächige Einlass des Oberflächenwassers durch die bislang typischerweise vorhandene Abdeckung, die für Wasser durchlässig ist und sich über die gesamte Länge des Gehäuses erstreckt, nicht mehr möglich ist. Weiterhin ist bei einer erfindungsgemäßen Ausgestaltung des Gehäuses das Einbringen des filterwirksamen Substrats bei der ersten Inbetriebnahme der Filteranlage sowie ein späterer Austausch des Substrats nicht von oben über die gesamte Länge des Gehäuses möglich, wie dies bislang der Fall ist, wenn die Abdeckung von den Rinnenabschnitten abgenommen ist. Angesichts dieser scheinbaren Nachteile ist es überraschend, dass eine vorschlagsgemäß ausgestaltete Filteranlage insgesamt vorteilhaft ist:
- Dadurch, dass ein oben geschlossenes Gehäuse verwendet wird, ist bereits das Gehäuse selbst in gewissem Maße durch von oben einwirkende Drücke belastbar. Der Einbau des Gehäuses in einen Boden wird insofern vereinfacht, was wirtschaftlich vorteilhaft ist. Der das Gehäuse überdeckende Boden selbst kann dann weitere Druckbelastungen aufnehmen und verteilen.
- Da das Oberflächenwasser anders als bei der erwähnten Rinne nicht auf der gesamten Länge in das Gehäuse einströmen muss, kann das Gehäuse mit demselben Bodenbelag überdeckt werden, der auch neben dem Gehäuse verwendet wird, so dass der Bodenbelag in einem ununterbrochenen Arbeitsgang über das Gehäuse hinweg erstellt werden kann. Insbesondere wenn beiderseits des Gehäuses der gleiche Bodenbelag vorgesehen ist, stellt dies eine erhebliche Arbeitserleichterung im Vergleich dazu dar, den Bodenbelag von beiden Seiten bis exakt an die Rinne anzuarbeiten.
- Dadurch, dass das Oberflächenwasser nicht über die gesamte Länge des Gehäuses unmittelbar in das Gehäuse einströmen kann, muss das Gehäuse nicht dort verlaufen, wo das Oberflächenwasser anfällt. Es ergeben sich somit größere konstruktive Freiheiten für den Einbau der Filteranlage, so dass diese dort eingebaut werden kann, wo dies besonders problemlos möglich ist, z. B. unter Berücksichtigung von im Boden vorhandenen Hindernissen.
- Ein Verbrauch des Substrats kann beispielsweise dadurch begründet sein, dass bestimmte Anteile in dem Substrat abgebaut werden, beispielsweise organische Anteile, oder dass sich das ursprünglich durchströmbare Porenvolumen innerhalb des Substrats durch Partikel verringert, die in dem Substrat zurückgehalten und somit aus dem Oberflächenwasser herausgefiltert worden sind. Obwohl das Gehäuse der vorschlagsgemäßen Filteranlage nach oben geschlossen ist, kann verbrauchtes Substrat überraschend einfach dadurch aus dem Gehäuse entfernt werden, dass es in einem Spülvorgang aus dem Gehäuse herausgeschwemmt wird. Beispielsweise kann dies mittels eines Spül- und Saugfahrzeugs erfolgen, wie es ähnlich aus der Praxis für die Reinigung von Kanalrohren bekannt ist.
- Falls der Auslass der Filteranlage in einen Schacht mündet, beispielsweise um das gefilterte Wasser daraus in einen Sammeltank oder in die Kanalisation zu leiten, ist der Schacht in an sich bekannter Weise von oben zugänglich. Statt einer Absaugung durch das erwähnte Spül- und Saugfahrzeug kann bei einem Spülvorgang das Substrat in dem Schacht aufgefangen werden, beispielsweise sedimentiert im Schacht selbst oder in einem in den Schacht eingebrachten Filterbeutel, so dass jedenfalls das Substrat anschließend mitsamt den darin zurückgehaltenen Partikeln aus dem Schacht entnommen und entsorgt oder aufbereitet werden kann.
- Das Substrat in das oben geschlossene Gehäuse einzuführen, hat sich in ersten Versuchen angesichts der Länge des Gehäuses als überraschend einfach herausgestellt. Auch in dieser Hinsicht bringt die oben geschlossene Bauform des Gehäuses keinen wirtschaftlichen Nachteil in Form einer komplizierten Handhabung des Substrats mit sich.
- Vielmehr kann in einer Ausgestaltung der Filteranlage das Substrat durch den Einlass in das Gehäuse eingeführt werden, z. B. in Art einer länglichen Patrone. Das Substrat ist hierzu von einer Hülle umgeben, die mit Durchtrittsöffnungen für das Wasser versehen ist. Die Patrone kann verformbar ausgestaltet sein, beispielsweise indem sie eine textile Hülle aufweist, in welcher das Substrat angeordnet ist. Das Substrat kann während seiner Nutzungsdauer innerhalb der Hülle verbleiben, so dass es später problemlos mitsamt der Hülle erfasst und gehandhabt werden kann, wenn es aus dem Gehäuse entnommen werden soll.
- In einer anderen Ausgestaltung kann das Substrat als Schüttung in das Gehäuse eingebracht werden. Um das Substrat über eine längere Strecke möglichst gleichmäßig innerhalb des Gehäuses verteilen zu können, kann das Substrat durch Vibrationen fluidisiert werden, beispielsweise mit einer Rüttelflasche, wie sie von der Betonverarbeitung bekannt ist.
- In einer anderen Ausgestaltung kann das Substrat mittels einer Schiebebewegung innerhalb des Gehäuses verteilt werden, z. B. mittels eines Paddels oder Schiebers. Dies gilt sowohl für ein als Schüttgut in das Gehäuse eingebrachtes Substrat als auch für Substrat, welches in Art einer Kartusche in einer für Wasser durchlässigen Hülle vorliegt. Das dazu benutzte Schiebewerkzeug kann bedarfsweise in das Gehäuse eingeführt werden, um auf das dort befindliche Substrat einzuwirken, das z. B. zuvor lose in das Gehäuse geschüttet worden ist und einen Haufen gebildet hat, oder das zuvor in Form mehrerer Kartuschen in das Gehäuse geschüttet worden ist, wobei die Kartuschen ihrerseits einen Haufen gebildet haben.
- In einer anderen Ausgestaltung sind die Kartuschen so groß bemessen, dass sie kein Haufwerk aus kleinen Kartuschen bilden, sondern dass sie im Gehäuse hintereinander angeordnet sind und in Schieberichtung eine hintere Kartusche als Druckübertragungselement dient, um die davor befindliche Kartusche zu verschieben. Die Betätigung muss also nur von der jeweils hintersten Kartusche aus erfolgen, um diese und auch sämtliche davor befindlichen Kartuschen zu verschieben. Auch wenn die Strecke, auf welcher das Schiebewerkzeug in Längsrichtung des Gehäuses auf das Substrat einwirken kann, begrenzt ist, kann auf diese Weise das Substrat über eine deutlich längere Strecke innerhalb des Gehäuses verteilt werden.

- Die Kartuschen sind in einer Ausgestaltung zugfest miteinander verbunden. Dies ermöglicht später deren problemlose Entnahme aus der Filteranlage: nur die in Entnahmerichtung erste Kartusche muss erfasst werden, die z. B. innerhalb oder unterhalb eines an das Gehäuse anschließenden Steigrohrs problemlos erreichbar ist, dann können diese erste und alle anderen damit verbundenen Kartuschen aus dem Gehäuse und dem Steigrohr herausgezogen werden. Die Kartuschen können zu diesem Zwecke an einem durchgängigen langen Seil befestigt sein, oder sie können durch kurze Seile jeweils miteinander verbunden sein. In einer Ausgestaltung sind die Kartuschen von vornherein zusammenhängend ausgestaltet, gegebenenfalls sogar ohne dass hierzu zusätzliche Elemente erforderlich sind: z. B. indem ihre wasserdurchlässige Hülle wie ein textiler Schlauch oder Strumpf ausgestaltet ist, der einfach durch Knotenbildung oder durch zusätzliche Klammern od. dergl. in einzelne Abschnitte unterteilt ist, die jeweils mit Substrat gefüllt sind und die jeweilige Kartusche bilden.
- Insbesondere wenn das Schiebewerkzeug an einer Stütze abgestützt werden kann, die somit einen Gelenkpunkt bildet, kann das Schiebewerkzeug in Art eines Hebels bedient werden, so dass die beiden Hebelabschnitte oberhalb und unterhalb der Stütze in entgegengesetzten Richtungen bewegt werden. Je nach Position der Stütze und Länge des Schiebewerkzeugs kann ein horizontaler Hub über eine besonders große Strecke innerhalb des Gehäuses ermöglicht werden. In einer als vorteilhaft angesehenen Ausgestaltung werden besonders geringe Bedienkräfte oberhalb der Bodenoberfläche ermöglicht, indem der Hebelabschnitt des Schiebewerkzeugs oberhalb der Stütze länger ist als der Hebelabschnitt unterhalb der Stütze.

- In einer anderen Ausgestaltung kann das als Schüttgut bereitgestellte Substrat durch ein Rotationswerkzeug mittels einer Drehbewegung innerhalb des Gehäuses verteilt werden. Ein Rotationswerkzeug ermöglicht die Verteilung des Substrats über eine längere Strecke, indem einfach das Rotationswerkzeug dementsprechend lang bemessen ist. So sind auch Stellen problemlos erreichbar, die sich weit entfernt von Stellen befinden, die mittels eines Schiebewerkzeugs erreichbar sind.
- Ein solches Rotationswerkzeug kann z. B. als eine Förderschnecke ausgestaltet sein oder z. B. als eine Wendel, die innerhalb einer biegsamen, schlauchartigen Rohrhülle angeordnet und in der Praxis unter der Bezeichnung als "Förderspirale" oder "Spirale", typischerweise ohne Seele, bekannt ist.

Eine solche Förderspirale ist flexibel und kann sich durch das Gehäuse und im Bogen bis zum oberen Ende eines Steigrohrs erstrecken. Dort kann beispielsweise ein Fülltrichter an die Förderspirale angesetzt werden, um das Substrat in die Förderspirale einzubringen. Alternativ kann ein Füllrohr schräg an die Rohrhülle, in welcher die Förderspirale läuft, anschließen. Oder die Rohrhülle kann bereichsweise mit großflächigen Öffnungen versehen sein, die als Einfüllfenster das Eindringen von Substrat in die Rohrhülle und in die Förderspirale ermöglichen. Der Austritt des Substrats kann an einem Stirnende der Rohrhülle oder radial mittels Austrittsöffnungen erfolgen, welche die Rohrhülle aufweisen kann. Der Antrieb der Wendel innerhalb der Rohrhülle kann manuell erfolgen, beispielsweise mittels einer Kurbel, oder er kann motorisch erfolgen, z. B. mittels eines Elektromotors.

Das Substrat bewirkt einen Förderwiderstand durch seine Materialeigenschaften, z. B. durch innere und äußere Reibung. Um angesichts der Flexibilität der Wendel zu verhindern, dass diese sich angesichts des Förderwiderstandes verformt und komprimiert wird, können ein oder mehrere Lager dazu dienen, die Wendel zu führen, z. B. kann ein Lager an dem Ende der Rohrhülle angeordnet sein, welches von dem Antrieb der Wendel entfernt ist.
- Das Antriebsorgan für das Rotationswerkzeug, z. B. die erwähnte Kurbel oder der erwähnte Motor, kann fest verbaut in der Filteranordnung verbleiben. Um erstens Kapital in einem möglichst geringen Umfang zu binden und um zweitens Standschäden aufgrund längerer Nichtbenutzung zu vermeiden, weist die Förderspirale in einer Ausgestaltung Anschlussmittel auf, an welche bei Bedarf das jeweils zu verwendende Antriebsorgan angeschlossen werden kann. So kann das Antriebsorgan, beispielsweise ein Antriebsmotor, in einem Servicefahrzeug mitgeführt werden und in dem Intervall zwischen zwei Wartungen einer bestimmten Filteranlage zum Antrieb von Förderorganen anderer Filteranlagen verwendet werden.
- Auch für die Förderspirale selbst gilt, dass diese entweder fest in der Filteranlage verbaut sein kann oder aus den oben genannten Gründen bei Bedarf in das Gehäuse eingeführt werden kann, um dann das Substrat auf einer größeren Länge des Gehäuses zu verteilen. Falls die Förderspirale fest in der Filteranlage verbaut ist, weist die Rohrhülle in einer Ausgestaltung nicht nur stirnseitig, sondern auch in ihrer Mantelfläche Austrittsöffnungen auf, durch welche das Substrat über die Länge der Rohrhöhle gleichmäßig verteilt nach außen abgegeben werden kann.
- Die bewegliche Handhabung einer nicht fest verbauten Förderspirale ermöglicht es, die Förderspirale während der Befüllung des Gehäuses nach und nach aus dem Gehäuse und einem Steigrohr herauszuziehen, um die Abgabe des Substrats aus dem unteren Ende der Förderspirale nicht durch bereits im Gehäuse befindliches Substrat zu behindern. Aber auch bei dieser beweglichen Handhabung der Förderspirale können die erwähnten Austrittsöffnungen in der Mantelfläche vorgesehen sein, um die Handhabung der Förderspirale zu erleichtern und die Wartungsarbeiten zu vereinfachen, indem kein kontrolliertes Zurückziehen der Förderspirale während des Einbringens der Substratmenge erforderlich ist, sondern vielmehr die Förderspirale einfach nach Einbringen der gesamten Substratmenge aus dem Gehäuse und dem Steigrohr herausgezogen werden kann.
- In einer anderen Ausgestaltung kann das als Schüttgut bereitgestellte Substrat ebenfalls durch ein Rotationswerkzeug mittels einer Drehbewegung innerhalb des Gehäuses verteilt werden, jedoch mittels eines starren Elements, z. B. mittels einer Förderschnecke. Aufgrund ihrer starren Ausgestaltung kann die Förderschnecke vorteilhaft dauerhaft im Gehäuse angeordnet sein. Auch sie kann mittels eines Antriebsorgans angetrieben werden, z. B. mittels einer Kurbel und / oder biegsamen Welle oder mittels eines Motors, wobei dieses Antriebsorgan entweder bedarfsweise an die Förderschnecke angeschlossen werden kann oder in einer anderen Ausgestaltung dauerhaft mit der Förderschnecke verbunden sein kann.
- Anders als bei einer typischen Installation einer Förderschnecke, deren Durchmesser den inneren Querschnitt einer Rohrleitung üblicherweise möglichst vollständig ausfüllt, kann die Schnecke einen so geringen Durchmesser aufweisen, dass sie den Querschnitt im Inneren des Gehäuses bewusst nur teilweise ausfüllt und offen läuft, also nicht umfangsmäßig vollständig ummantelt ist. So kann erreicht werden, dass das Substrat nicht innerhalb des Gehäuses von einer ersten zu einer zweiten Stelle transportiert, sondern vielmehr möglichst gleichmäßig verteilt wird, unabhängig davon, ob die einzelnen Schneckengänge zunächst gleichmäßig und unterschiedlich gefüllt werden.
- Auf das Volumen im Inneren des Gehäuses, in welchem das Substrat aufgenommen werden soll, kann die in das Gehäuse einzufüllende Substratmenge abgestimmt sein. Beispielsweise kann das Substrat als Schüttgut in einem oder in mehreren Säcken oder Tonnen bereitgestellt werden, und Schüttgut, welches in einer für Wasser durchlässigen Hülle als Kartusche bereitgestellt wird, kann durch die Abmessungen und / oder die Anzahl der Kartuschen auf die jeweilige Ausgestaltung des Gehäuses abgestimmt sein.

Durch die Abstimmung der Substratmenge auf das Gehäuse der Filteranlage wird ein Einblick von außen in das Innere des Gehäuses nicht erforderlich, und bei Wartungsarbeiten muss nicht während des Befüll-Vorgangs der Füllstand des Substrats in dem Gehäuse regelmäßig kontrolliert werden, so dass das Befüllen einer Filteranlage mit Substrat erheblich vereinfacht wird und in kurzer Zeit durchgeführt werden kann. Eine bestimmte, bereitgestellte Substratmenge wird in das Gehäuse eingefüllt und somit kann ein vorbestimmter Füllstand des Substrats in dem Gehäuse sichergestellt werden. Beispielsweise kann es wünschenswert sein, den Gehäusequerschnitt nicht vollständig mit Substrat auszufüllen, um nicht nur eine stirnseitige Anströmfläche des in einer Substratkammer befindlichen Substrats bereitzustellen, sondern vielmehr eine großflächige Anströmung des zu behandelnden Wassers zu ermöglichen, beispielsweise indem das Wasser innerhalb der Substratkammer von oben in das Substrat einströmen kann.

Im Unterschied zu einem aufrecht ausgerichteten Schacht wird die Filteranlage erfindungsgemäß liegend, z. B. annähernd horizontal, in den Boden eingebaut, beispielsweise nahe der Bodenoberfläche, jedoch tiefer als die bekannten, oben offenen Rinnen oder Mulden, so dass eine Bodenoberfläche geschaffen werden kann, die sich bis über das Gehäuse der Filteranlage erstreckt. Es ist zu erwarten, dass je nach dem Einbauort der Filteranlage und den dort auftretenden Niederschlagsereignissen das als Substrat bezeichnete Filtermedium nach einer gewissen Zeit trockenfällt, bevor erneute Niederschläge zum Auftreten von Oberflächenwasser führen, welches in den Einlass der Filteranlage einströmt. Je höher das Gehäuse im Boden angeordnet ist, umso größer ist diese Wahrscheinlichkeit des Trockenfallens. Wenn das gefilterte Wasser beispielsweise zur Bewässerung von Pflanzen genutzt werden soll, ermöglicht eine möglichst hohe Anordnung des Gehäuses im Boden die bodennahe Verlegung einer Versickerungsleitung, so dass auch Pflanzen mit vergleichsweise kurzen Wurzeln zuverlässig versorgt werden können, z. B. Rasenpflanzen oder junge, noch wachsende Pflanzen. Durch die liegende Ausrichtung des Gehäuses, und insbesondere, wenn auch das Substrat in liegender Richtung verteilt angeordnet ist, kann an der Oberseite des Substrats eine große Anströmfläche für das zu filternde, in die Filteranlage einströmende Wasser geschaffen werden.

Schließlich ist erfindungsgemäß weiterhin vorgesehen, dass ein Steigrohr an das Gehäuse anschließt, welches im Gebrauch aufwärts verläuft und sich wenigstens bis zur Bodenoberfläche erstreckt, ggf. sogar darüber hinaus. Durch dieses Steigrohr wird eine Verbindung zu dem liegend ausgerichteten Gehäuse der Filteranlage geschaffen, so dass für Wartungsarbeiten ein Zugang zum Gehäuseinneren durch das Steigrohr ermöglicht ist. Beispielsweise kann das Filtermedium wie z.B. das erwähnte Substrat in das Gehäuse eingebracht oder aus dem Gehäuse entnommen werden, oder zur Reinigung des Innenraums des Gehäuses kann ein Saugschlauch oder Spülschlauch durch das Steigrohr bis in das Gehäuse geführt werden, um das Substrat oder abgelagerte Sedimente aus dem Gehäuse absaugen oder das Gehäuse spülen zu können. Die Filteranlage kann mehr als ein einziges Steigrohr aufweisen. Eine möglichst große Freiheit, das Gehäuse im Boden anzuordnen, ergibst sich jedoch dann, wenn die Filteranlage nur ein einziges Steigrohr aufweist, so dass nur ein einziger Punkt konstruktiv bestimmt ist, an welchem die Filteranlage in eine Bodenoberfläche münden muss.

Durch die Bezeichnung als Steigrohr kommt zum Ausdruck, dass dieser Rohrkörper, der an das Gehäuse anschließt, einen so geringen Durchmesser aufweisen kann, dass er zwar Wartungsarbeiten ermöglicht, aber nicht begehbar ist. Durch den geringen Durchmesser und ein dementsprechend geringes Gewicht wird erstens die Handhabung der Komponenten der Filteranlage erleichtert, wenn die Filteranlage im Boden montiert wird, und zweitens kann diese Montage mit möglichst geringen Erdarbeiten, unter anderem einer geringen Menge an Aushub, ermöglicht werden.

Trotz der Bezeichnung als Steigrohr kann in einer Ausgestaltung dieser Rohrkörper einen so großen Durchmesser aufweisen, dass er begehbar ist. Dies kann beispielsweise wünschenswert sein, falls bei der Filteranlage eine Begehung des liegenden Gehäuses ermöglicht werden soll, so dass der Zugang in das Gehäuse durch das Steigrohr erfolgen kann, das in diesem Fall mit seinem entsprechend großen Durchmesser einen begehbaren Wartungsschacht bildet.

Die Filteranlage kann ein Gehäuse mit einem mehreckigen Querschnitt aufweisen, beispielsweise indem es aus mehreren Platten hergestellt ist. In einer als vorteilhaft erachteten Ausgestaltung weist sie ein Gehäuse mit einem kreisrunden Querschnitt auf, da so eine hohe Druckstabilität gegeben ist und die Einbringung und Verteilung des Substrats sowie später eine Reinigung des Gehäuses einfach durchführbar ist. Zudem können handelsübliche, wirtschaftlich erhältliche Rohre zur Schaffung des Gehäuses verwendet werden, wie sie z.B. im Bereich der Kanalisation und Hausanschlüsse praxisüblich sind.

Die Erfindung wird nachfolgend anhand von rein schematisch dargestellten Ausführungsbeispielen näher erläutert. Elemente, die in den Darstellungen gezeigt und in der folgenden Beschreibung erläutert werden, können auch einzeln oder in anderer Kombination als dargestellt erfinderisch sein. Maßnahmen, z. B. zur Handhabung bestimmter Elemente eines Ausführungsbeispiels, können auch bei vergleichbaren oder anderen Elementen dieses oder eines anderen Ausführungsbeispiels angewendet werden. In den Darstellungen zeigt
- Fig. 1: einen Vertikalschnitt durch ein erstes Ausführungsbeispiel einer Filteranlage,
- Fig. 2 und 3: jeweils in Stirnansicht und Draufsicht Hilfsmittel zum Einbringen von Substrat in das Gehäuse einer Filteranlage,
- Fig. 4 bis 6: Ansichten ähnlich Fig. 1 für weitere Ausführungsbeispiele einer Filteranlage,
- Fig. 7: eine perspektivische Ansicht auf eine Wasserrückhalte- und Bewässerungsanordnung, die
- Fig. 8 bis 15: Ansichten weiterer Ausführungsbeispiele einer Filteranlage.

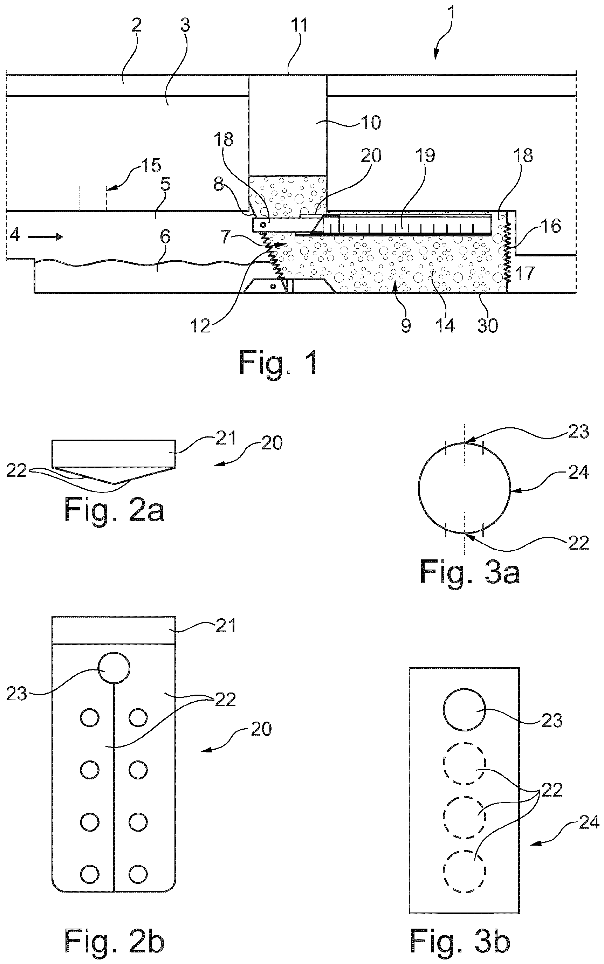

Fig. 1 zeigt eine horizontal durchströmte Filteranlage 1 für Oberflächenwasser, die in einen Boden 3 eingebaut ist. Die Filteranlage 1 weist ein liegend angeordnetes, rohrförmiges Gehäuse 30 mit kreisrundem Querschnitt auf. Mit Schmutzfrachten belastetes Wasser stammt von Oberflächen wie z. B. von Verkehrsflächen, Dachflächen oder sonstigen Flächen. Es fließt beispielsweise auf einem Bodenbelag 2 des Bodens 3 ab, wobei der Bodenbelag 2 z. B. als Pflasterung oder Asphaltdecke ausgestaltet sein kann. Das Oberflächenwasser wird über einen stirnseitigen Einlass 4 in das Gehäuse 30 eingeleitet. Die Fließrichtung nach rechts ist mit einem Pfeil angedeutet.

Stromaufwärts von dem Einlass 4 kann beispielsweise - in Fig. 1 nicht dargestellt - ein um 90° aufwärts gebogenes Bogenstück an den Einlass 4 anschließen, welches z. B. mit einem Gitter abgedeckt sein kann, das bündig mit der begehbaren Oberfläche des Bodenbelags 2 angeordnet ist, so dass auf dem Bodenbelag 2 fließendes Oberflächenwasser in das Bogenstück und dann in den Einlass 4 der Filteranlage 1 gelangt, oder an das erwähnte Bogenstück kann ein Fallrohr eines Hausdachs anschließen, so dass das von der Dachfläche herabströmendes Oberflächenwasser in das Bogenstück und dann in den Einlass 4 der Filteranlage 1 gelangt. Insbesondere besteht auch die Möglichkeit, dass das Bogenstück in größerer Entfernung von der Filteranlage 1 angeordnet sein kann, so dass das eingeleitete Oberflächenwasser über eine dementsprechend große Strecke mittels einer Rohrleitung zu der Filteranlage 1 geführt wird.

Die im Oberflächenwasser enthaltenen gröberen Schmutzpartikel können sich in einem Schlammraum 5 des Gehäuses 30 absetzen, wo sie eine Sedimentschicht 6 bilden. Abweichend von dem dargestellten Ausführungsbeispiel kann der Schlammraum 5 als separate Einheit mit einem eigenen Gehäuse ausgestaltet sein und über ein Verbindungsrohr mit der weiter unten beschriebenen Filtereinheit der Filteranlage 1 verbunden sein.

Bei einem niedrigem Füllstand des Wassers im Schlammraum 5 fließt das Wasser, wie durch einen Pfeil 7 angedeutet, in Strömungsrichtung durch eine Trennplatte 8, die sich zwischen dem Schlammraum 5 und einem Filterraum 9 befindet. Die Trennplatte 8 ragt in ein Steigrohr 10 hinein, das nach oben an das Gehäuse 30 anschließt und durch den die Trennplatte 8 aus der Filteranlage 1 entnommen werden kann. Das Steigrohr 10 ist durch einen Deckel 11 verschlossen, der als Gussteil aus Eisen oder Kunststoff hergestellt sein kann. Derartige Deckel 11 werden im öffentlichen Raum in an sich bekannter Weise verwendet.

Die entnehmbare Trennplatte 8 weist im mittleren Bereich ein Filtersieb 12 auf, welches bei dem dargestellten Ausführungsbeispiel in Form eines Gewebes ausgestaltet ist. Die Trennplatte 8 trennt den Schlammraum 5, der sich stromaufwärts von der Trennplatte 8 befindet, von dem Filterraum 9, der stromabwärts von der Trennplatte 8 in der Filteranlage 1 angeordnet ist und in dem sich ein Filtermedium in Form eines Substrats 14 befindet. Bei dem dargestellten Ausführungsbeispiel ist die Trennplatte 8 zudem so angeordnet, dass sie den Schlammraum 5 nicht nur vom Filterraum 9, sondern auch vom Steigrohr 10 trennt. Abweichend davon kann die Trennplatte 8 in der Art angeordnet sein, dass sowohl der Schlammraum 5 als auch der Filterraum 9 über das Steigrohr 10 zugänglich sind.

Zusätzlich zu dem Steigrohr 10 kann der Schlammraum 5 eine separate Spül- und Reinigungsöffnung aufweisen. In Fig. 1 ist dies Form eines gestrichelt angedeuteten Wartungsstutzens 15 vorgesehen, der im Bereich des Schlammraums 5 nach oben an das Gehäuse 30 anschließt.

Das Gewebe des Filtersiebes 12 ist hinsichtlich seiner Maschenweite oder Porengröße auf das Substrat 14 abgestimmt. Das Substrat 14 kann daher nicht in den Schlammraum 5 gelangen, das Wasser jedoch einschließlich der Schmutzfracht, die sich nicht bereits im Schlammraum 5 als Sediment 6 abgesetzt hat, aus dem Schlammraum 5 in den Filterraum 9 fließen und in das dort befindliche Substrat 14 einströmen. Das Substrat 14 wird vom Wasser durchströmt und hält die im Wasser unerwünschten Stoffe zurück, z. B. aufgrund einer rein mechanischen Filterwirkung. Je nach Ausgestaltung oder Zusammensetzung des Substrats 14 kann dieses die im Wasser unerwünschten Stoffe jedoch auch abbauen, z. B. durch im Substrat 14 enthaltene Aktivkohle, oder durch biologisch wirksame Anteile im Substrat 14, oder dergleichen.

Das Wasser fließt in Strömungsrichtung durch das Substrat 14 hindurch und gelangt zu einem Rückhaltesieb 16, welches den Filterraum 9 begrenzt und verhindert, dass das Substrat 14 aus dem Filterraum 9 herausgeschwemmt wird. Wie das Filtersieb 12 ist bei dem dargestellten Ausführungsbeispiel auch das Rückhaltesieb 16 als Gewebe ausgestaltet. Das gefilterte Wasser gelangt zu einem Auslass 17, durch welchen es die Filteranlage 1 verlässt.

Bei dem dargestellten Ausführungsbeispiel ist in dem Gehäuse 30 eine Prallplatte 18 montiert, die sich durch etwa das obere Drittel des Filterraums 9 erstreckt. Die Prallplatte 18 verhindert eine Durchströmung des Filterraums 9 in diesem oberen Drittel in der Art, dass Wasser in diesem oberen Drittel aus dem Filterraum 9 herausfließen kann. Unabhängig von der Höhe des Füllstandes in der Filteranlage 1 muss das Wasser daher immer das Substrat 14 passieren, selbst wenn abweichend von der Darstellung in Fig. 1 der Filterraum 9 nicht vollständig bis oben mit dem Substrat 14 gefüllt sein sollte. Eine solch unvollständige Befüllung des Filterraums 9 kann sich beim Einbringen des Substrats 14 ergeben oder auch nach einiger Zeit im Betrieb der Filteranlage, z. B. falls sich das Substrat 14 setzt.

Im Laufe eines Nutzungsintervalls, bis das Substrat 14 gewechselt wird, wird sich der Schlammraum 5 erwartungsgemäß immer weiter mit Sediment 6 füllen. Es ist weiterhin zu erwarten, dass sich das Substrat 14 zunächst nahe der Trennwand 8 und dann im weiteren zeitlichen Verlauf auch immer mehr in Strömungsrichtung mit feinen, im Substrat 14 zurückgehaltenen Partikeln der Schmutzfracht des Wassers zusetzt, so dass das Substrat in diesem Bereich dann als gesättigt bezeichnet werden kann. Dadurch, und auch bei einem besonders starken, länger andauernden Zufluss, kann es dazu kommen, dass der Wasserspiegel im Schlammraum 5 ansteigt. Um nach Möglichkeit zu vermeiden, dass die hydraulische Kapazität der Filteranlage 1 überschritten wird, ist im Filterraum 9 ein Entlastungsrohr 18 angeordnet. Wenn der Wasserspiegel im Schlammraum 5 entsprechend hoch ansteigt, tritt das Wasser in das Entlastungsrohr 18 ein und fließt darin durch den Filterraum 9, ohne das Substrat 14 passieren zu müssen.

Bei dem dargestellten Ausführungsbeispiel ist das Entlastungsrohr 18 geschlossenwandig ausgestaltet und in ein daran anschließendes Verteilrohr 19 eingesteckt, welches Durchtrittsöffnungen aufweist, z. B. Löcher und / oder Schlitze. Abweichend von dem dargestellten Ausführungsbeispiel kann das Entlastungsrohr 18 die Durchtrittsöffnungen aufweisen und so lang bemessen sein, dass es gleichzeitig auch das in Fig. 1 dargestellte Verteilrohr 19 ersetzt.

Wenn das Substrat 14 in einem bestimmten, in Strömungsrichtung vorderen, der Trennwand 8 nahen Bereich gesättigt ist, kann das Wasser in Strömungsrichtung diesen vorderen Bereich durch das Entlastungsrohr 18 passieren und gelangt danach durch die Durchtrittsöffnungen des Verteilrohrs 19 in einen in Strömungsrichtung hinteren, ungesättigten Bereich des Substrats 14, so dass nach wie vor eine Filtration erfolgt. So wird die Standzeit der Filteranlage 1 bis zu einem erforderlichen Wechsel des Substrats 14 deutlich gesteigert. Wenn jedoch das gesamte Substrat 14 gesättigt sein sollte, oder wenn bei entsprechender Niederschlagsintensität ein besonders starker, länger andauernden Wasserzufluss in die Filteranlage 1 einströmt und diese ihre hydraulische Kapazitätsgrenze erreicht, kann ein Rückstau von Wasser vermieden oder verzögert oder verringert werden, indem das Wasser praktisch ohne nennenswerte Filtration durch das Entlastungsrohr 18 und das Verteilrohr 19 bis vor die Prallplatte 18 und von dort durch das Rückhaltesieb 16 in den Auslass 17 strömen kann.

Um die Entnahme des Substrats 14 zu erleichtern, ist bei dem dargestellten Ausführungsbeispiel vorgesehen, das Entlastungsrohr 18 aus der Filteranlage 1 zu entnehmen. Ggf. kann zusätzlich auch das Verteilrohr 19 entnommen werden, jedoch kann dies grundsätzlich auch in der Filteranlage 1 verbleiben. Das Substrat 14 ist bereits nach der Entnahme des Entlastungsrohrs 18 gut zugänglich, so dass es mittels eines im Kanalbetrieb bekannten Spül- und Saugwagens und unter Verwendung einer ebenfalls praxisüblichen Reinigungsdüse aus der Filteranlage 1 entfernt werden kann. Abweichend von dem dargestellten Ausführungsbeispiel kann das Entlastungsrohr 18 in der Art verlaufen, dass es aus dem Schlammraum 5 heraus und unter Umgehung der Trennwand 8 und des Steigrohrs 10 bis zum Verteilrohr 19 geführt wird. In diesem Fall kann das Substrat 14 durch das Steigrohr 10 entfernt werden, ohne dass das Entlastungsrohr 18 hinderlich im Wege wäre, so dass die zusätzlichen Handhabungsschritte, die mit der Entnahme und einem späteren Wiedereinsetzen des Entlastungsrohrs 18 verbunden sind, entfallen können.

Zur Befüllung des Filterraums 9 mit dem Substrat 14 können verschiedene Methoden Anwendung finden. Bei kurzen Filterräumen 9 kann es möglich sein, das Substrat 14 einzuspülen / einzuschwemmen. Andere Verfahren wie eine Förderung des Substrats 14 mittels einer Spirale oder Schnecke, wie dies aus dem Bereich der Tierfütterung bekannt ist, mittels eines Gebläses, mittels eines Gasstroms, z. B. durch einen Druckluftkompressor erzeugt, oder mittels einer Fluidisierung des Substrats 14, z. B. durch einen Betonrüttler, kommen ebenfalls in Betracht. Insbesondere bei langen Gehäusen 30 und dementsprechend langen Filterräumen 9 kann der Einsatz eines Betonrüttlers vorteilhaft sein, z. B. in Form einer praxisüblichen Rüttelflasche. Diese bringt das Substrat 14 in Schwingung und sorgt auch bei längeren Ausführungen des Filterraumes 9 für eine gleichmäßige Verteilung des Substrats 14. Das jeweils geeignete Verfahren zum Einbringen des Substrats wird insbesondere in Abhängigkeit von den rheologischen Eigenschaften des Substrats 14 bestimmt, z. B. von dessen Konsistenz und Körnung.

Abweichend von dem dargestellten Ausführungsbeispiel kann eine entsprechend lange Filteranlage 1 mehrere Einlässe 4 und mehrere Filterräume 9 aufweisen, und in diesem Fall, aber auch im Falle nur eines einzigen vorhandenen Einlasses 4, kann abweichend von dem dargestellten Ausführungsbeispiel ein Einlass nicht stirnseitig, sondern in die Umfangsfläche des Gehäuses 30 münden, z. B. seitlich oder von oben.

Um eine möglichst gleichmäßige Verteilung des Substrats 14 im Filterraum 9 zu unterstützen, kann es vorteilhaft sein, im Steigrohr 10 eine beweglich aufgehängte Platte 20 oder ein Rohr ähnlich dem Verteilrohr 19 anzuordnen. Die Platte 20 bzw. das entsprechende Rohr dient als Leitelement, so dass von oben auftreffendes Substrat 14, welches nach Entfernung des Deckels 11 in das Steigrohr 10 eingebracht wird, durch dieses Leitelement möglichst weit innerhalb des Filterraums 9 verteilt werden kann. Hierzu kann das Leitelement mittels einer Rüttelflasche in Schwingungen versetzt werden, die sich auf das Substrat 14 übertragen, wenn das Substrat 14 auf das Leitelement auftrifft oder das Leitelement in das Substrat 14 eintaucht. Bei dem dargestellten Ausführungsbeispiel ist die Platte 20 schräg zur Senkrechten angeordnet, damit das Substrat 14 durch die Vibrationen der Rüttelflasche zu dem Ende "wandert", das der oberen Öffnung des Steigrohrs 10 abgewandt ist.

Um die Platte 20 oder das alternative Rohr ausreichend anzuregen, also in Schwingung zu versetzen, kann es vorteilhaft sein, einen Formschluss zwischen dem Rüttler der Rüttelflasche und dem Leitelement herzustellen. Hierzu kann das Leitelement ein genau passendes Loch aufweisen, in das der Rüttler eingesteckt werden kann, wobei dieses Loch des Leitelements durch das Steigrohr 10 problemlos zugänglich ist.

Fig. 2 zeigt ein Ausführungsbeispiel der in Fig. 1 nur angedeuteten Platte 20. Die Fig. 2a zeigt dabei eine Stirnansicht auf die Platte 20 und die Fig. 2b eine Draufsicht. Die Platte 20 ist als Blechformteil ausgestaltet, das in zweifacher Hinsicht abgewinkelt ist, so dass sie insgesamt schaufelartig geformt ist. Ein aufrechter Abschnitt bildet eine Schürze 21 und schließt mit einer ersten Knicklinie an einen liegenden Abschnitt an, der in Form von zwei Längsflügels 22 ausgestaltet ist, die mittels einer zweiten Knickline V-förmig zueinander stehen. An Stelle der erwähnten Knicklinien können die Flächen der Platte 20 auch jeweils gebogen, z. B. mittels eines Radius, aneinander anschließen. Die beiden Längsflügel 22 bilden eine Förderrinne, in deren Längsrichtung das Substrat beim Einbringen der Rüttelenergie entlang "wandert". Wenn die Platte 20 leicht schräg abwärts geneigt ausgerichtet ist und unterhalb des Steigrohrs 10 weiter in den Filterraum 9 führt, kann das Substrat 14 dementsprechend weit in den Filterraum 9 eingebracht werden und nicht nur ein Schüttkegel unterhalb des Steigrohrs 10 erzeugt werden.

Die Längsflügel 22 sind mit Löchern 23 versehen, durch welche das Substrat 14 in den Filterraum 9 rieseln kann, so dass eine Verteilung des Substrats 14 erreicht wird und das Substrat 14 die Platte 20 nicht nur ausschließlich an deren Ende verlässt. Eine Einstecköffnung 23 ist geringfügig größer bemessen als der Durchmesser der Rüttelflasche eines Betonrüttlers. Die Rüttelflasche kann in diese Einstecköffnung 23 eingesteckt werden und übertragt die Schwingungen auf die Platte 20.

Die nach oben ragende Schürze 21 dient als Leitfläche und sorgt dafür, dass das Substrat 14, welches von oben in das Steigrohr 10 eingebracht wird und auf die Platte 20 gelangt, auf deren Längsflügel 22 und in die davon gebildete Rinne geführt wird.

Die Platte 20 ist beweglich aufgehängt, beispielsweise mit Seilen, Gummipuffern oder ähnlichem, damit sie die Rüttelbewegung ausführen kann. Insbesondere bei der Aufhängung an Seilen ist die Platte 20 zudem so beweglich, dass sie annähernd horizontal verschoben oder um eine aufrechte Achse geschwenkt werden kann, wodurch die Fläche, über welche das Substrat verteilt werden kann, nochmals vergrößert werden kann.

Fig. 3 zeigt ebenfalls ein Leitelement zur Verteilung des Substrats, nämlich ein Rohr 24 als Alternative zu der Platte 20. Die Fig. 3a zeigt dabei eine Stirnansicht auf das Rohr 24 und die Fig. 3b eine Draufsicht. Auch das Rohr 24 kann wie die Platte im Filterraum 9 beweglich und leicht schräg aufgehängt. Aufgrund der Schrägstellung des Rohrs 24 kann das Substrat 14 in das obere Ende des Rohrs 24 eintreten. Eine Einstecköffnung 23, in welche der zylindrische Teil eines Rüttlers eingesteckt werden kann, ist im oberen Umfangsabschnitt des Rohrs 24 angeordnet, während die Löcher 23, durch die das Substrat 14 in den Filterraum 9 rieselt, an der Unterseite des Rohrs 24 angeordnet sind.

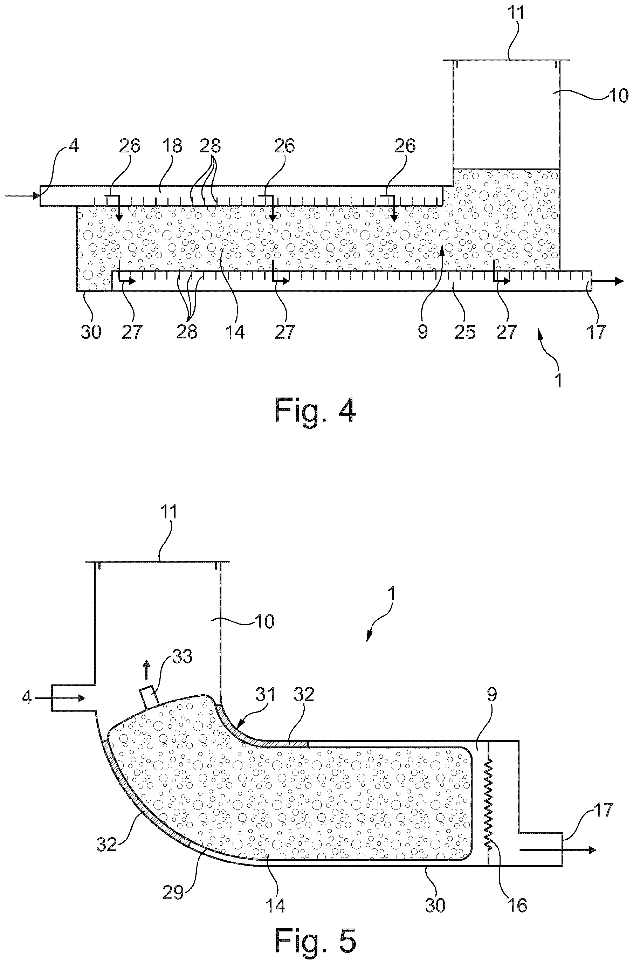

Fig. 4 zeigt ein Ausführungsbeispiel einer Filteranlage 1, bei der sich nahezu über die gesamte Länge des Filterraums 9 ein Verteilrohr 18 im oberen Bereich des Gehäuses 30 und ebenso nahezu über die gesamte Länge des Filterraums 9 ein Ablaufrohr 25 im unteren Bereich des Gehäuses 30 angeordnet sind. Je nach konstruktiver Ausgestaltung der Filteranlage 1 können die Verteil- und Ablaufrohre 18 und 25 innerhalb des Filterraums 9 oder außen am Filterraum 9 angebracht sein. Wenn sie außen angebracht sind, sind sie in an mehreren Stellen wasserdurchlässig mit dem Filterraum 9 verbunden. Bei dem dargestellten Ausführungsbeispiel sind sie innerhalb des Filterraums 9 angeordnet und weisen als Durchtrittsöffnungen Schlitze 28 auf, die in den Filterraum 9 münden.

Das Wasser fließt durch den Einlass 4 in das Verteilrohr 18 und gelangt, wie jeweils bei 26 angedeutet, durch die Schlitze 28 in den Filterraum 9 und somit in das Substrat 14. Gefiltertes Wasser strömt dann aus dem Substrat 14 durch die Schlitze 28, wie jeweils bei 27 angedeutet, in das Ablaufrohr 25 und fließt zum Auslass 17. Unabhängig davon, ob das Wasser auf dem kürzesten Weg vom Verteilrohr 18 in das Ablaufrohr 25 fließt, das Substrat 14 also annähernd senkrecht durchströmt wird, oder ob das Wasser auch in horizontaler Richtung durch das Substrat 14 fließt, wird jedenfalls die Filteranlage 1 insgesamt aufgrund der Anordnung des Einlasses 4 und des Auslasses 17 horizontal durchströmt. Wie anhand von Fig. 1 bereits erläutert, können sich je nach Sättigung des Substrats die Stellen 26 und 27 vom Einlass 4 weg verschieben, wo das Wasser aus dem Verteilrohr 18 in das Substrat 14 und aus dem Substrat 14 in das Ablaufrohr 25 eintritt.

Die Befüllung des Filterraums 9 mit dem Substrat 14 kann erfolgen wie anhand von Fig. 1 erläutert. Bei einer entsprechend groß bemessenen Ausgestaltung der Schlitze 28 im Verteilrohr 18 kann das Verteilrohr 18 zur Befüllung des Filterraums 9 mit Substrat 14 genutzt werden. Hierzu kann z. B. einer Schnecke oder eine Förderspirale innerhalb des Verteilrohrs 18 dienen. Eine solche Schnecke oder eine Förderspirale kann bedarfsweise in das Verteilrohr 18 eingesetzt werden, oder alternativ auch dauerhaft in dem Verteilrohr 18 verbleiben. Das Zulaufwasser fließt in einem solchen Fall durch und an der Schnecke oder Förderspirale vorbei.

Das Gehäuse 30 der Filteranlage 1 weist bei dem Ausführungsbeispiel der Fig. 2 lediglich den Filterraum 9 auf. Abweichend von dem dargestellten Ausführungsbeispiel kann die Filteranlage 1 um einen Schlammraum 5 ergänzt sein, der dem Filterraum 9 vorgeschaltet ist und entweder in einem entsprechend verlängerten Gehäuse 30 untergebracht sein kann oder in einem separaten Gehäuse, dessen Auslass zum Einlass 4 des Gehäuses 30 führt.

Fig. 5 zeigt ein Ausführungsbeispiel einer Filteranlage 1, bei welcher das Gehäuse 30 gebogen verläuft und beispielsweise aus drei handelsüblichen Rohrabschnitten zusammengesetzt sein kann, beispielsweise aus einem geraden, liegenden Rohrstück, einem 90°-Bogenstück und einem geraden, aufrechten Rohrstück, welches das Steigrohr 10 bildet. Auch der Filteranlage 1 der Fig. 5 kann ein Schlammraum 5 vorgeschaltet sein.

Bei dem Ausführungsbeispiel der Fig. 5 ist vorgesehen, das Substrat 14 in einem für Wasser durchlässigen Beutel 29 anzuordnen, so dass es nicht als Schüttung in den Filterraum 9 eingebracht und verteilt werden muss, sondern mittels des gefüllten Beutels 29 das gesamte Substrat 14 gehandhabt werden kann. Durch die Abmessungen des Beutels 29 ist automatisch die gewünschte Verteilung des Substrats 14 im Filterraum 9 gewährleistet, nachdem der Beutel 29 in den Filterraum 9 eingebracht worden ist.

Durch einen ausreichend groß gewählten Innenradius 31 des Bogenstücks - oder alternativ einer in den Bogen eingesetzten schrägen Platte - kann der Beutel 29 mitsamt dem darin befindlichen Substrat 14 nach Entfernung des Deckels 11 durch das Steigrohr 10 in den Filterraum 9 eingeschoben werden. Bei dem dargestellten Ausführungsbeispiel ist eine als vorteilhaft erachtete Ausgestaltung des Beutels 29 verwirklicht, indem der Beutel 29 außen zumindest bereichsweise mit einem dickeren, von Wasser durchströmbarem Material versehen ist. Der Beutel 29 kann in diesen Bereichen beispielsweise eine textile Umhüllung 32 aufweisen, z. B. ein Gestrick, Gewirk oder Gewebe, beispielsweise ein Abstandsgewebe. Ähnlich wie das Verteilrohr 18 kann diese durchströmbare Umhüllung 32 dazu dienen, den Zu- und Abfluss von Wasser in das und aus dem Substrat 14 auch dann noch zu ermöglichen, wenn der dem Einlass 4 nahe Bereich des Substrats 14 bereits mit aus dem Wasser herausgefilterten Partikeln gesättigt ist. Dementsprechend kann auch bei den anderen Ausführungsbeispielen an Stelle starrer Verteil- und Ablaufrohre 18 und 25 ein verformbares Material wie das Material der erwähnten Umhüllung 32 verwendet werden, um das eingeströmte Oberflächenwasser in Bereiche ungesättigten Substrats 14 sowie das gefilterte Wasser daraus heraus zu führen.

Auch die Filteranlage 1 der Fig. 5 weist ein Rückhaltesieb 16 auf, das aus einem Gewebe-Material bestehen kann und das den Filterraum 9 vom Auslass 17 abgrenzt.

Mittels einer Öse 33 kann ein verbrauchter Beutel 29, wie durch einen aufwärts zeigenden Pfeil angedeutet, aus dem Filterraum 9 entnommen und aus dem Steigrohr 10 gezogen werden. An der Öse 32 hängend kann ein frischer Beutel 29 in den Schacht abgesenkt und dann weiter in den Filterraum 9 eingeschoben werden, beispielsweise mittels einer Stange.

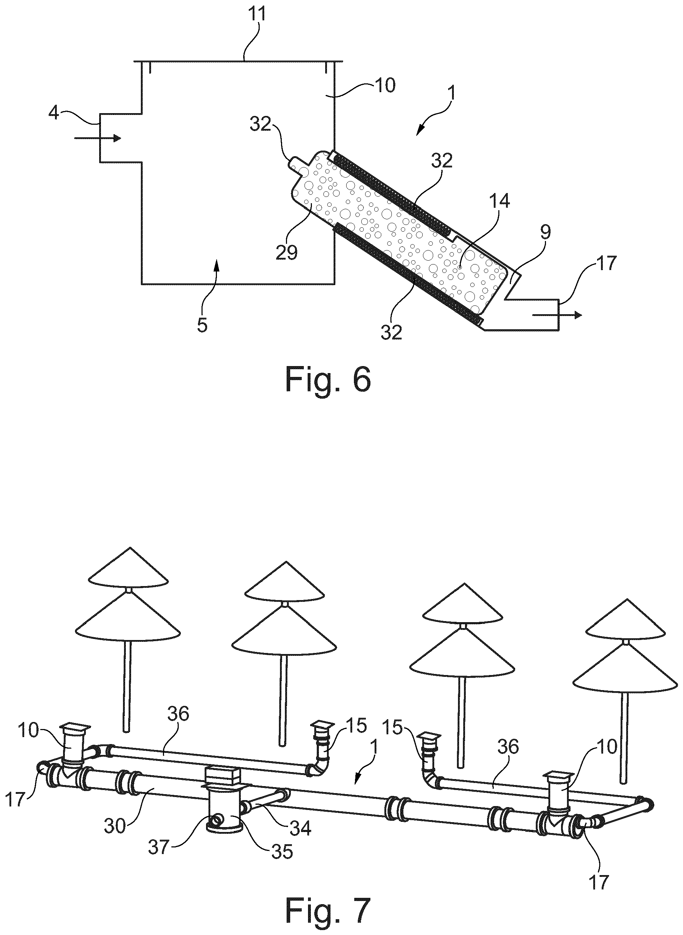

Fig. 6 zeigt eine Filteranlage 1, die horizontal durchströmt wird und ähnlich der Fig. 5 ausgestaltet ist, allerdings ist der Filterraum 9 schräg angeordnet. Das Wasser strömt durch den Einlass 4 in die Filteranlage 1 ein. Das Steigrohr 10 erfüllt in seinem unteren Bereich auch die Funktion eines Schlammraums 5, alternativ kann der dargestellten Filteranlage 1 ein zusätzlicher Schlammraum 5 vorgeschaltet sein.

Das Substrat 14 kann auch bei diesem Ausführungsbeispiel in einem wasserdurchlässigen, verformbaren Beutel 29 vorliegen, der auch in diesem Fall bereichsweise versetzt mit einer Umhüllung 32 versehen ist. Aufgrund des geradlinigen Filterraums 9 kann das Substrat 14 alternativ zu einem Beutel 29 in einer starren Wechselpatrone bereitgestellt werden, wobei Beutel oder Patrone mittels einer Öse 33 gehandhabt werden können. Die starre Wechselpatrone kann mit einem Verteilrohr 18 und einem Ablaufrohr 25 ausgestattet sein, oder die Anströmung und der Abfluss des Wassers kann durch ein dickeres, gegebenenfalls textiles, durchströmbares Material erfolgen.

Fig. 7 zeigt eine Filteranordnung mit einer Filteranlage 1, an deren rohrförmiges Gehäuse 30 nahe seiner beiden Enden jeweils ein Steigrohr 10 anschließt. Diese Filteranlage 1 ist mit ihrem vergleichsweise langen Gehäuse 30 wie die symmetrische Anordnung zweier kleinerer Filteranlagen 1 z. B. des in Fig. 1 dargestellten Typs ausgestaltet und ermöglicht dementsprechend, dass durch die beiden Steigrohre 10 Substrat 14 an zwei verschiedenen Stellen in das Gehäuse 30 eingebracht werden kann. Bezogen auf seine Länge weist das Gehäuse 30 in seiner Mitte einen seitlich in das Gehäuse 30 mündenden Einlass 4 auf, der über eine Einlassleitung 34 mit einem Schachtbauwerk 35 in Verbindung steht, das Oberflächenwasser aufnimmt und beispielsweise als Straßenablauf ausgestaltet sein kann.

Das Gehäuse 30 weist an seinen beiden Enden jeweils einen Auslass 17 auf, an den eine Versickerungsleitung 36 anschließt, die zur Bewässerung von schematisch angedeuteten Bäumen dient. Jede Versickerungsleitung 36 verläuft von dem Auslass 17 zu einem Wartungsstutzen 15, der einerseits zur Wartung der jeweiligen Versickerungsleitung 36 genutzt werden kann, z. B. zum Spülen, um Sedimente zu entfernen, und der andererseits zur Wartung oder Pflege der Bäume dienen kann, beispielsweise um Luft, oder in längeren Trockenzeiten auch Wasserspenden von einem Tankwagen, in den Wurzelbereich der Bäume zu führen.

Falls das Fassungsvermögen des Gehäuses 30 und auch der daran anschließenden Versickerungsleitungen 36 erreicht ist, können zusätzliche Wassermengen, die in das Schachtbauwerk 35 einströmen, durch einen als Überlauf 37 bezeichneten Anschluss abgeleitet werden, z. B. in die Kanalisation.

Rein beispielhaft ist bei der Filteranordnung der Fig. 7 dargestellt, dass die Auslässe 17 abweichend von den bislang beschriebenen Ausführungsbeispielen nicht im unteren, sondern im oberen Bereich an das Gehäuse 30 anschließen. Hierdurch wird ein Mindestfüllstand innerhalb des Gehäuses 30 sichergestellt, der beispielsweise je nach der verwendeten Zusammensetzung des Substrats 14 bestimmten Mikroorganismen das Überleben während längerer Trockenzeiten ermöglichen kann. Abweichend von der Darstellung in Fig. 7 können aber auch bei dieser Filteranordnung die Auslässe 17 an das Gehäuse 30 in dessen unterem Bereich anschließen.

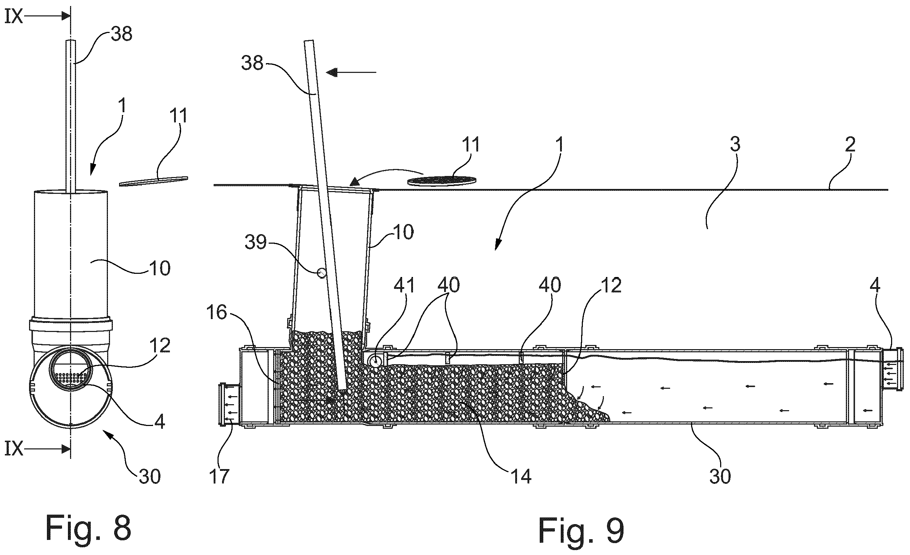

Die Fig. 8 und 9 zeigen ein Ausführungsbeispiel einer Filteranlage 1, bei welcher das Substrat 14 durch das Steigrohr 10 in das Gehäuse 30 eingebracht worden und anschließend mittels eines Schiebewerkzeugs 38 verteilt worden ist. Fig. 8 zeigt eine Stirnansicht auf die Einlassseite der Filteranlage 1, und Fig. einen Längsschnitt durch die Filteranlage entlang der Linie IX - IX von Fig. 8. Das Schiebewerkzeug 38 ist ähnlich wie ein Paddel ausgestaltet und weist einen langen Stiel auf, an dessen unteren Ende sich eine als Blatt bezeichnete Fläche befindet, mit welcher auf das Substrat 14 eingewirkt werden kann. In dem Steigrohr 10 verläuft quer eine als Stütze 39 bezeichnete Strebe, an welcher der Stiel des Schiebewerkzeugs 38 abgestützt werden kann. Eine Bewegung des Stiels an seinem oberen Ende nach links bewirkt dementsprechend eine Bewegung des Blatts am unteren Ende des Schiebewerkzeugs 38 nach rechts, wie durch die beiden Pfeile in Fig. 9 angedeutet ist. Wenn das Substrat 14 als Schütthaufen unterhalb des Steigrohrs 10 im Gehäuse 30 liegt, kann es dementsprechend mittels des Schiebewerkzeugs 38 in Längsrichtung des Gehäuses 30 verteilt werden.

Um eine vollständige Befüllung über den gesamten Querschnitt des Gehäuses 30 zwischen dem Filtersieb 12 und dem Rückhaltesieb 16 zu vermeiden, weist die Filteranlage 1 bei dem Ausführungsbeispiel der Fig. 8 und 9 kein Verteilerrohr 19 wie das Ausführungsbeispiel der Fig. 1 auf, sondern mehrere Sperrleisten 40. Diese halten den oberen Bereich im Inneren des Gehäuses 30 frei und verhindern, dass das Substrat bis in diesen Bereich geschaufelt werden kann. Die Sperrleisten 40 sich mit Durchbrechungen versehen, beispielsweise in Form von Bohrungen oder Schlitzen, so dass Wasser in diesen für Substrat 14 gesperrten Bereich einströmen kann. So wird eine große Anströmfläche bereitgestellt, über welche Wasser in das Substrat 14 einströmen kann. Der Wasserspiegel ist in Fig. 9 mit W angedeutet und es ist ersichtlich, dass das Wasser innerhalb einer Kammer des Gehäuses 30, die durch das Filtersieb 12 und das Rückhaltesieb 16 begrenzt ist, nicht nur stirnseitig, sondern auch von oben in das Substrat einströmen kann.

Weiterhin ist in diesem oberen Bereich, nahe der Stelle, wo das Steigrohr 10 in das Gehäuse 30 mündet, eine Rolle 41 angeordnet, deren Drehachse quer zur Längsachse des Gehäuses 30 verläuft. Die Rolle 41 dient als Verschleißschutz für einen Saug- oder Spülschlauch sowie für die Filteranlage 1 selbst, wenn der Saug- oder Spülschlauch durch das Steigrohr 10 und bis in das Gehäuse 30 eingebracht wird sowie anschließend wieder herausgezogen wird.

Bei dem Ausführungsbeispiel der Fig. 8 und 9 ist erkennbar, dass die beiden Enden des Gehäuses 30 mithilfe von Rohrkappen abgedeckt sind und über die Gesamtlänge des Gehäuses 30 mehrere Bauteile mithilfe von Doppelmuffe aneinander anschließen, so dass das Gehäuse 30, dass Steigrohr 10 und auch der Deckel 11 wirtschaftlich vorteilhaft aus handelsüblichen Bestandteilen eines Rohrlieferprogramms geschaffen werden können. Einige dieser Bauteile können unverändert verwendet werden, während andere Bauteile mit speziellen zusätzlichen Elementen versehen werden wie den Filter- und Rückhaltesieben 12 und 16, der Stütze 39, den Sperrleisten 40 und der Rolle 41.

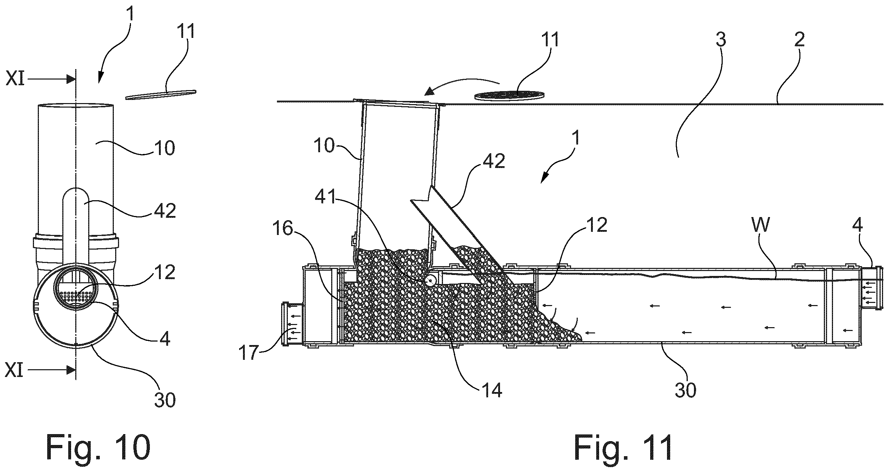

Die Fig. 10 und 11 zeigen in einer Stirnansicht und einem Längsschnitt ähnlich wie die Fig. 8 und 9 ein weiteres Ausführungsbeispiel einer Filteranlage 1. Die Filteranlage 1 der Fig. 10 und 11 entspricht im Wesentlichen dem Ausführungsbeispiel der Fig. 8 und 9, jedoch wurde bei diesem Ausführungsbeispiel das Substrat 14 nicht nur durch das Steigrohr 10 selbst, sondern auch durch ein vom Steigrohr 10 abzweigendes Substratrohr 42 in das Gehäuse 30 eingebracht. Dementsprechend weist das Steigrohr 10 auch keine Stütze 39 für ein Schiebewerkzeug 38 auf. Durch den Verlauf des Substratrohrs 42, insbesondere durch die Wahl der Stelle, an welcher es in das Gehäuse 30 mündet, kann Substrat 14 über einen weiten Bereich in das Gehäuse 30 eingebracht werden.

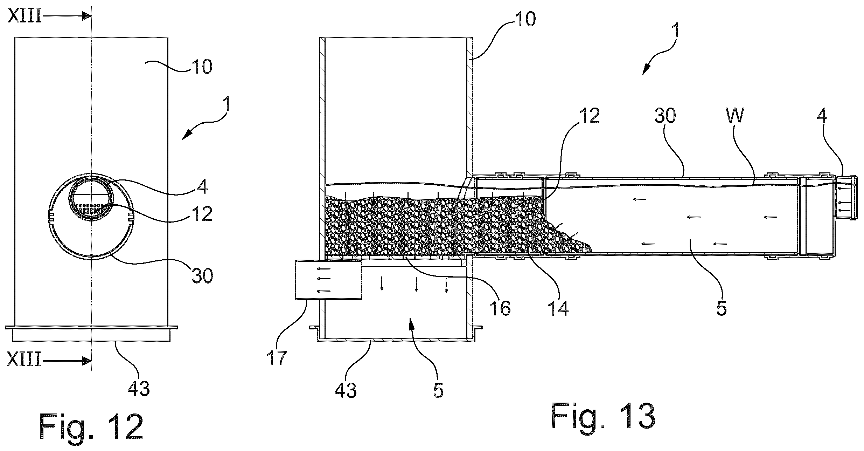

Die Fig. 12 und 13 zeigen ebenfalls in einer Stirnansicht und einem Längsschnitt ein weiteres Ausführungsbeispiel einer Filteranlage 1. Bei dieser verläuft das Steigrohr 10 bis unter das Gehäuse 30, und das Rückhaltesieb 16 begrenzt die Kammer, in welcher sich das Substrat 14 im Gehäuse 30 befindet, nicht stirnseitig, sondern nach unten hin. So genanntes behandeltes Wasser, welches nämlich das Substrat 14 passiert hat, gelangt daher durch das Rückhaltesieb 16 in einen zweiten Schlammraum 5, der sich unterhalb des Gehäuses 30 im Steigrohr 10 befindet und als Absetzraum für Partikel dient, die sich trotz der Filterwirkung des Substrats 14 möglicherweise noch in dem behandelten Wasser befinden. Während sich die meisten und insbesondere die gröberen Partikel in einem ersten Schlammraum 5 in Strömungsrichtung vor dem Substrat 14 ablagern, also in Fig. 13 rechts im Gehäuse 30, dient der zweite Schlammraum 5 insbesondere als Beruhigungsraum und Speicherraum der Filteranlage 1.

Der Auslass 17 schließt an den Schlammraum 5 an, und zwar im Abstand oberhalb einer Bodenkappe 43, die das Steigrohr 10 und somit auch den Schlammraum 5 nach unten abschließt. Durch diesen Abstand wird ein Bereich in der Filteranlage 1 geschaffen, aus dem kein Wasser aus der Filteranlage 1 herausfließt. Dadurch ist gewährleistet, dass Sedimente, die sich auf der Bodenkappe 43 abgesetzt haben, in einem strömungsberuhigten Bereich der Filteranlage 1 verbleiben und im Rahmen von Wartungsarbeiten, nach Entnahme des Rückhaltesiebs 16, aus dem Schlammraum 5 entfernt werden können.

Bei dem dargestellten Ausführungsbeispiel befindet sich der Auslass 17 unmittelbar unterhalb des Gehäuses 30. Abweichend davon kann unterhalb des Gehäuses 30 ein Speichervolumen für behandeltes Wasser angeordnet sein, beispielsweise indem das Steigrohr 10 länger bemessen ist und weiter nach unten ragt als in den Fig. 12 und 13 dargestellt. Der Auslass 17 ist dann im Abstand unterhalb des Gehäuses 30 angeordnet. Wenn der Boden 3 dort, wo das behandelte Wasser abgegeben werden soll, z. B. mittels einer Versickerungsleitung 36, mit Wasser gesättigt ist und kein Wasser aufnehmen kann, steigt das behandelte Wasser über die Oberkante des Auslasses 17 und innerhalb des Steigrohrs 10 an. Die Filteranlage weist in diesem Fall nicht nur innerhalb des Gehäuses 30, sondern auch im Steigrohr ein Fassungsvermögen für Wasser auf, welches zwischengespeichert werden kann, bis das behandelte Wasser abgegeben werden kann und dieser Zwischenspeicher dadurch geleert wird.

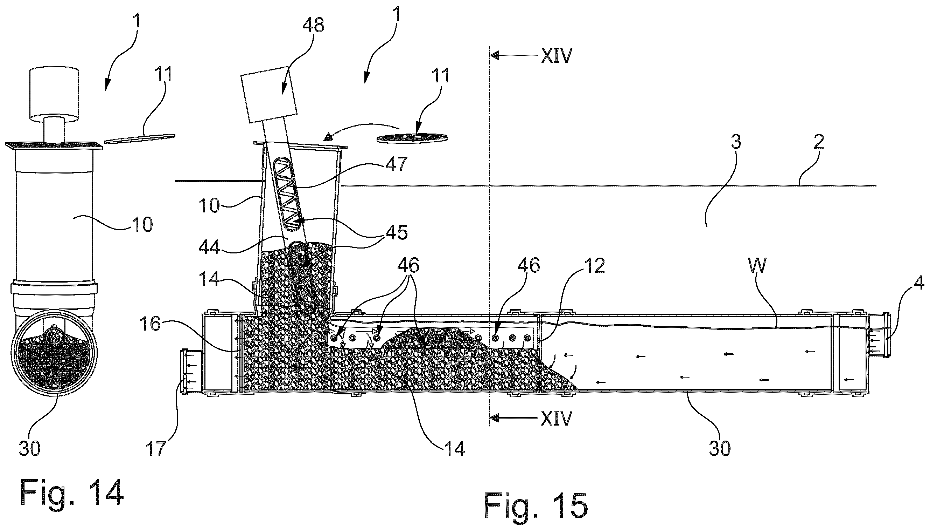

Fig. 15 zeigt einen Längsschnitt durch ein weiteres Ausführungsbeispiel einer Filteranlage 1 und Fig. 14 einen Querschnitt entlang der in Fig. 15 eingezeichneten Linie XIV - XIV. Bei diesem Ausführungsbeispiel ist die Filteranlage 1 während der Durchführung von Wartungsarbeiten dargestellt, während nämlich Substrat 14 in das Gehäuse 30 eingefüllt wird. Hierzu dient ein biegsames Förderrohr 44, das in seinem oberen Abschnitt, welcher sich in dem Steigrohr 10 befindet, großflächige Einfüllfenster 45 aufweist, und in seinem unteren Abschnitt, welcher sich in dem Gehäuse 30 befindet, eine Vielzahl von Austrittsöffnungen 46 aufweist. Im Inneren des Förderrohrs 44 läuft eine in der Praxis so genannte Förderspirale 47, die als wendelförmiger Draht ausgestaltet ist und von einem Motor 48 um ihre Längsachse in Drehung versetzt werden kann.

Zunächst wird der Deckel 11 von dem Steigrohr 10 abgenommen und das biegsame Förderrohr 44 in das Steigrohr 10 und bis in das Gehäuse 30 eingeführt. Anschließend wird Substrat 14 in das Steigrohr 10 eingefüllt. Das Substrat 14 gelangt durch die Einfüllfenster 45 in das Innere des Förderrohrs 44. Bei geeigneter Drehrichtung fördert die Förderspirale 47 das Substrat 14 in Richtung der beim Förderrohr 44 in Fig. 15 eingezeichneten Pfeile, so dass das Substrat 14 innerhalb des Gehäuses 30 durch die Austrittsöffnungen 46 aus dem Förderrohr 44 heraus und in das Innere des Gehäuses 30 strömen kann.

Der Motor 48 ist bei dem Ausführungsbeispiel schematisch als fest mit dem Förderrohr 44 verbundenes Element dargestellt. Abweichend davon kann er als separates Antriebselement ausgestaltet sein, welches über eine Kupplung an die Förderspirale 47 angeschlossen und bedarfsweise von dieser getrennt werden kann. Die Trennung kann die Handhabung bei Transport und Lagerung, z. B. beim Verstauen in einem Werkstattwagen, erleichtern, da das Gewicht auf zwei separat handhabbare Komponenten aufgeteilt werden kann. Beispielsweise kann der Motor in Form eines akkubetriebenen elektrischen Handwerkzeugs bereitgestellt werden, so dass der Motor auch für die Durchführung anderer Arbeiten genutzt werden kann.

### Bezugszeichen:

- 1: Filteranlage
- 2: Bodenbelag
- 3: Boden
- 4: Einlass
- 5: Schlammraum
- 6: Sedimentschicht
- 7: Pfeil (niedriger Wasserstand)
- 8: Trennplatte
- 9: Filterraum
- 10: Steigrohr
- 11: Deckel
- 12: Filtersieb
- 14: Substrat
- 15: Wartungsstutzen
- 16: Rückhaltesieb
- 17: Auslass
- 18: Entlastungsrohr
- 19: Verteilrohr
- 20: Platte
- 21: Schürze
- 22: Längsflügel
- 23: Einstecköffnung
- 24: Rohr
- 25: Ablaufrohr
- 26: Stelle, wo Wasser aus dem Verteilrohr in das Substrat gelangt
- 27: Stelle, wo Wasser aus dem Substrat in das Ablaufrohr gelangt
- 28: Schlitz
- 29: Beutel
- 30: Gehäuse
- 31: Innenradius
- 32: Umhüllung
- 33: Öse
- 34: Einlassleitung
- 35: Schachtbauwerk
- 36: Versickerungsleitung
- 37: Überlauf
- 38: Schiebewerkzeug
- 39: Stütze
- 40: Sperrleiste
- 41: Rolle
- 42: Substratrohr
- 43: Bodenkappe
- 44: Förderrohr
- 45: Einfüllfenster
- 46: Austrittsöffnung
- 47: Förderspirale
- 48: Motor

## Patentansprüche

1. Filteranlage (1) für Oberflächenwasser,
mit einem länglichen Gehäuse (30), welches im Gebrauch liegend ausgerichtet und im Boden (3) angeordnet ist,
und mit einem filterwirksamen Substrat (14), das in dem Gehäuse (30) angeordnet ist,
und mit einem Einlass (4), durch den das Oberflächenwasser in das Gehäuse (30) einströmt, wenn sich die Filteranlage (1) im Gebrauch befindet,
und mit einem Auslass (17), durch den das gefilterte Oberflächenwasser aus dem Gehäuse (30) herausströmt, wenn sich die Filteranlage (1) im Gebrauch befindet,
wobei Einlass (4) und Auslass (17) in Längsrichtung des Gehäuses (30) versetzt angeordnet sind, derart, dass das Oberflächenwasser das Gehäuse (30) in dessen Längsrichtung vom Einlass (4) zum Auslass (17) durchströmt,
**dadurch gekennzeichnet,**
**dass** Gehäuse (30) nach oben geschlossen ausgestaltet ist und an das Gehäuse (30) ein Steigrohr (10) anschließt,
welches im Gebrauch aufwärts und wenigstens bis zur Bodenoberfläche des Bodens (3) verläuft.

2. Filteranlage nach Anspruch 1,
**dadurch gekennzeichnet,**
**dass** das Gehäuse (30) einen kreisrunden Querschnitt aufweist.

3. Filteranlage nach Anspruch 1 oder 2,
**dadurch gekennzeichnet,**
**dass** ein Einlass (4) und / oder ein Auslass (17) an einem Ende des Gehäuses (30) in das Gehäuse (30) mündet.

4. Filteranlage nach einem der vorhergehenden Ansprüche,
**dadurch gekennzeichnet,**
**dass** ein Einlass (4) von oben in das Gehäuse (30) mündet.

5. Filteranlage nach einem der vorhergehenden Ansprüche,
**dadurch gekennzeichnet,**
**dass** das Substrat (14) innerhalb einer für Wasser durchlässigen Hülle angeordnet ist.

6. Filteranlage nach einem der vorhergehenden Ansprüche,
**dadurch gekennzeichnet,**
**dass** in dem Gehäuse (30) eine offen laufende Förderschnecke angeordnet ist, die sich in Längsrichtung durch das Gehäuse (30) erstreckt.

7. Filteranlage nach einem der Ansprüche 1 bis 5,
**gekennzeichnet durch**
eine Förderspirale, die in einer Rohrhülle angeordnet ist, welche sich **durch** das Steigrohr (10) und bis in das Gehäuse (30) erstreckt.

8. Filteranlage nach Anspruch 6 oder 7,
**dadurch gekennzeichnet,**
**dass** das als Förderschnecke oder Förderspirale ausgestaltete Förderorgan Anschlussmittel für den Anschluss einer Kurbel aufweist.

9. Filteranlage nach Anspruch 6 oder 7,
**dadurch gekennzeichnet,**
**dass** das als Förderschnecke oder Förderspirale ausgestaltete Förderorgan Anschlussmittel für den Anschluss eines elektrischen Antriebsmotors aufweist.

10. Filteranlage nach einem der vorhergehenden Ansprüche,
**dadurch gekennzeichnet,**
**dass** sich von dem Steigrohr (10) ein Substratrohr (42) abwärts bis zu dem Gehäuse (30) erstreckt und im Abstand von dem Steigrohr (10) in das Gehäuse (30) mündet.

11. Verfahren zum Einbringen von Filtermaterial in Form eines schüttfähigen Substrats (14) in eine Filteranlage (1) nach einem der Ansprüche 1 bis 10,
**dadurch gekennzeichnet,**
**dass** zunächst die Filteranlage (1) im Boden (3) installiert wird,
und **dass** später das Substrat (14) von oben durch das Steigrohr (10) bis in das Gehäuse (30) eingebracht wird, und anschließend innerhalb des liegend ausgerichteten Gehäuses (30) in dessen Längsrichtung verteilt wird.

12. Verfahren nach Anspruch 11,
**dadurch gekennzeichnet,**
**dass** das Substrat (14) in einer für Wasser durchlässigen Hülle als Kartusche bereitgestellt wird,
und **dass** die Kartusche innerhalb des Gehäuses (30) in dessen Längsrichtung verschoben wird.

13. Verfahren nach Anspruch 12,
**dadurch gekennzeichnet,**
**dass** das Substrat (14) in mehreren Kartuschen bereitgestellt wird,
und **dass** die Kartuschen in Reihe hintereinander innerhalb des Gehäuses (30) in dessen Längsrichtung verschoben werden.

14. Verfahren nach Anspruch 12 oder 13,
**dadurch gekennzeichnet,**
**dass** die Kartuschen in der Form bereitgestellt werden, dass sie zugfest miteinander verbunden sind.

15. Verfahren nach einem der Ansprüche 11 bis 14,
**dadurch gekennzeichnet,**
**dass** ein Schiebewerkzeug (38) durch das Steigrohr (10) bis in das Gehäuse (30) der Filteranlage (1) eingebracht wird
und oberhalb des Steigrohrs (10) in der Art betätigt wird, dass innerhalb des Gehäuses (30) das Substrat (14) in Längsrichtung des Gehäuses (30) verschoben wird.

16. Verfahren nach Anspruch 15,
**dadurch gekennzeichnet,**
**dass** das Schiebewerkzeug (38) als Hebel in der Art betätigt wird, dass die Betätigungsrichtung oberhalb des Steigrohrs (10) der Schiebebewegung innerhalb des Gehäuses (30) entgegengerichtet ist.

17. Verfahren nach Anspruch 16,
**dadurch gekennzeichnet,**
**dass** das Schiebewerkzeug (38) einer Stütze (39), die sich innerhalb der Filteranlage (1) befindet, in der Art angelegt wird, dass die Betätigungsrichtungen oberhalb und unterhalb der Stütze (39) einander entgegengerichtet sind, wobei der Hebelabschnitt oberhalb der Stütze (39) größer ist als der Hebelabschnitt unterhalb der Stütze (39).

18. Verfahren nach Anspruch 11,
**dadurch gekennzeichnet,**
**dass** das Substrat (14) in eine Förderspirale eingebracht wird, die in einer Rohrhülle angeordnet ist, welche sich durch das Steigrohr (10) und bis in das Gehäuse (30) erstreckt.

19. Verfahren nach Anspruch 18,
**dadurch gekennzeichnet,**
**dass** die Rohrhülle samt Förderspirale zunächst in das Steigrohr (10) und bis in das Gehäuse (30) eingebracht werden,
anschließend das Substrat (14) mittels der Förderspirale in das Gehäuse (30) eingebracht wird,
und schließlich die Rohrhülle samt Förderspirale aus dem Gehäuse (30) und dem Steigrohr (10) entfernt werden.
